# EUROPÄISCHE PATENTSCHRIFT

(11) **EP 1 162 905 B1**
(45) Veröffentlichungstag und Bekanntmachung des Hinweises auf die Patenterteilung: **28.05.2003**
(21) Anmeldenummer: 00925045.7
(22) Anmeldetag: 10.03.2000
(51) Int. Cl.: A47J 31/54

(54) **VORRICHTUNG ZUR ELEKTRONISCHEN VERKALKUNGSÜBERWACHUNG**
DEVICE FOR ELECTRONICALLY MONITORING SCALING
DISPOSITIF DESTINE A LA SURVEILLANCE ELECTRONIQUE DE L'ENTARTRAGE

(30) Priorität: 19.03.1999 DE 19912444
(43) Veröffentlichungstag der Anmeldung: 19.12.2001
(73) Patentinhaber: Rational AG, 86899 Landsberg a. Lech (DE)
(72) Erfinder: BLASCHKE, Günter, D-86859 Holzhausen (DE)
(74) Vertreter: Weber-Bruls, Dorothée, Dr.
(86) Internationale Anmeldenummer: DE0000803
(87) Internationale Veröffentlichungsnummer: WO00056195

(56) Entgegenhaltungen:
- DE-A- 2 843 655
- DE-B- 2 556 231

## Beschreibung

Die Erfindung betrifft eine Vorrichtung zur elektronischen Verkalkungsüberwachung für eine Einrichtung zum Erwärmen und/oder Verdampfen einer Flüssigkeit, die einen Behälter zur zumindest zeitweisen Aufnahme einer Flüssigkeit mit einem Flüssigkeitszulauf, einem Flüssigkeitsablauf und/oder einem Dampfaustritt sowie einen Heizkörper zum Verdampfen von Flüssigkeit aus dem Behälter umfaßt.

Es sind zahlreiche gattungsgemäße Vorrichtungen im Stand der Technik bekannt, bei denen entweder Temperaturänderungen, wie sie sich aus Messungen der Temperatur und zum Teil zusätzlich deren Zeitverlauf ergeben, oder Stromänderungen, insbesondere bei galvanisch getrennten Stromzuführungen zu einem Heizkörper, erfaßt werden.

So ist, beispielsweise, aus der DE 42 18 440 A1 eine Kaffee- oder Teemaschine bekannt, die einen aus einem wasserführenden Durchlaufrohr und einem Heizaggregat bestehenden Durchlauferhitzer und eine Verkalkungsanzeigevorrichtung umfaßt, wobei die Verkalkungsanzeigevorrichtung eine in einer Gehäusewandung angeordnete Anzeigelampe aufweist, welche bei einem bestimmten Temperaturanstieg im Umgebungsbereich des Durchlauferhitzers in Folge einer Verkalkung des Durchlaufrohres eingeschaltet wird.

Die DE 28 39 062 C2 offenbart eine weitere Vorrichtung für einen Durchlauferhitzer, bei dem der Heizkörper im Bereich des Flüssigkeitseingangs und des Flüssigkeitsausgangs jeweils für sich galvanisch getrennte Stromzuführungen aufweist und eine Schaltung vorgesehen ist, mit der eine relative Stromänderung in diesen Stromzuführungen für diese beiden Bereiche als Signalspannung für eine Anzeigeeinrichtung benutzt wird.

Aus der DE 26 52 399 A1 ist eine elektrische Kaffeemaschine mit einer Verkalkungsanzeigeeinrichtung bekannt, die eine mit einem Zeitmesser gekoppelte Wasser-Füllstandmeß- oder einstelleinrichtung aufweist. Diese Verkalkungsanzeigeeinrichtung weisen einen großen Schaltungsaufwand auf.

Die DE 28 43 655 A1 offenbart eine Vorrichtung zur Übermittlung eines bestimmten Verkalkungsgrades von Heißwassergeräten, insbesondere Kaffeemaschinen, unter Einsatz einer Meßkammer mit einem Einlaß, durch welchen zumindest eine Teilmenge des erzeugten Heißwassers in die Meßkammer geleitet wird, was nicht auf Dampfgeneratoren übertragbar ist, bei denen kein Heißwasserablauf im Betrieb des Dampfgenerators durchlaufen wird.

Außerdem sind selbstverständlich zahlreiche Vorrichtungen und Verfahren zum Entfernen von Kalkablagerungen zwecks Gewährung eines einwandfreien Betriebs -einer Einrichtung zum Erwärmen und/oder Verdampfen einer Flüssigkeit bekannt. So ist, beispielsweise, in der EP 0 383 327 B1 ein Dampferzeuger für ein Gargerät, wie ein im Kombinationsbetrieb mit Heißluft und Heißdampf arbeitendes Tisch- oder Standgerät für die Gastronomie, Großküchen oder dergleichen, mit einem wassergefullten Kessel, der einen automatisch niveauregulierten Wasserzulauf, einen Dampfauslaß zum bedarfsweisen automatischen Einführen von Heißdampf in den Garraum des Gargerätes und eine intervallweise arbeitende Heizeinrichtung umfaßt, und einer Entkalkungseinrichtung, die eine nahe dem Boden sowie der Seitenwand des Kessels angeordnete Wasserablaßeinrichtung zum bedarfsweisen zumindest teilweisen Leeren des Kessel zwecks Ausschwemmen abgeplatzter, am Boden des Kessels sich sammelnder Kalkpartikel umfaßt, bekannt. Dabei weist die Wasserablaßeinrichtung eine in einstellbaren Intervallen in Abhängigkeit von der Betriebsdauer und/oder Betriebstemperatur der Heizeinrichtung automatisch sich einschaltende Ausschwemmpumpe auf, während nahe dem Boden des Kessels an einer der Ausschwemmpumpe im wesentlichen diametral gegenüberliegenden Stelle nahe der Kesselwand eine gemeinsam mit der Ausschwemmpumpe zu- und abschaltbare Ausschwemmzufluß angeordnet ist, so daß die sich am Boden des Kessels ansammelnden Kalkpartikel in Folge der starken Ströme und der Zwangsförderung mittels der Ausschwemmpumpe zuverlässig ausgeschwemmt werden.

Eine Niveauregulierung innerhalb eines Behälters über einen Pegelmesser bzw. Flüssigkeitsstandssensor ist jedem Fachmann gut bekannt und, beispielsweise, auch in der EP 0 191 267 B1 beschrieben. Dort ist zudem offenbart, daß zum Entfernen von Kalkstein eine Entkalkungssubstanz in einen Behälter eingefüllt werde kann.

Üblich ist es dabei, daß ein Entkalken in regelmäßigen Abständen stattfindet, die auf statistischen Hochrechnungen der Betriebszeiten und Erfahrungswerten beruhen, ohne daß tatsächlich Verkalkungsverhältnisse berücksichtigt werden.

Aufgabe der vorliegenden Erfindung ist es daher, die gattungsgemäße Vorrichtung derart weiterzuentwickeln, daß dessen Verkalkungszustand auf einfache Weise verläßlich überwachbar ist.

Diese Aufgabe wird erfindungsgemäß gelöst durch eine Auswerteeinheit in Verbindung mit zumindest einem Flüssigkeitsstandsensor und zumindest einem Durchflußmesser, wobei in die Auswerteeinheit ein Wert für ein Soll-Füllvolumen des Behälters eingebbar und/oder dort speicherbar ist, in der Auswerteeinheit das Soll-Füllvolumen mit einem über den Flüssigkeitsstandsensor erfaßten Nenn-Flüssigkeitsstand bei unter Einsatz des Durchflußmessers konstant zugegebener Wassermenge oder einer über den Durchflußmesser erfaßten Nenn-Einfüllmenge bei niveauregulierter Flüssigkeitseinfüllung unter Einsatz des Flüssigkeitsstandsensors vergleichbar ist, und von der Auswerteeinheit ein Signal aussendbar ist, das ein Maß für den absoluten Nenn-Flüssigkeitsstand, die absolute Nenn-Einfüllmenge, den zu dem Soll-Flüssigkeitsstand relativen Nenn-Flüssigkeitsstand und/oder den zu der Soll-Einfüllmenge relativen Nenn-Einfüllmenge ist.

Dabei kann vorgesehen sein, daß der Durchflußmesser eine Flüssigkeitsfließ- und/oder Verdampfungsrate erfaßt.

Ferner ist erfindungsgemäß vorgesehen, daß der Durchflußmesser ein Impulszähler ist.

Weiterhin kann eine Ausführungsform der Erfindung einen ersten Durchflußmesser stromaufwärts des Behälters und/oder einen zweiten Durchflußmesser stromabwärts des Behälters umfassen.

Auch kann erfindungsgemäß vorgesehen sein, daß das Signal anzeigt, daß die Differenz zwischen dem aus dem Nenn-Flüssigkeitsstand oder der Nenn-Einfüllmenge bestimmten Nenn-Füllvolumen und dem Soll-Füllvolumen zumindest einen bestimmten Schwellenwert überschreitet.

Eine Anzeigeeinheit, die das Signal der Auswerteeinheit empfängt und in Abhängigkeit von dem Signal einen optischen und/oder akustischen Warnhinweis ausgibt, vorzugsweise in Form von Leuchtsymbolen, kann erfindungsgemäß vorgesehen sein.

Dabei ist bevorzugt, daß die Auswerteeinheit und die Anzeigeeinheit in einem ausgeführt sind.

Ferner wird erfindungsgemäß auch vorgeschlagen, daß über die Auswerteeinheit ein Entkalkungsvorgang automatisch initiierbar ist.

Schließlich kann vorgesehen sein, daß die Einrichtung zum Erwärmen und/oder Verdampfen einer Flüssigkeit einen Dampfgenerator, vorzugsweise für ein Gargerät, umfaßt.

Der Erfindung liegt somit die überraschende Erkenntnis zugrunde, Füllvolumenveränderungen eines Behälters aufgrund von Kalkablagerungen konstruktiv einfach zu überwachen, um dann anzeigen zu können, wann eine Entkalkung durchzuführen ist, und/oder eine Entkalkung automatisch durchführen zulassen, sobald notwendig.

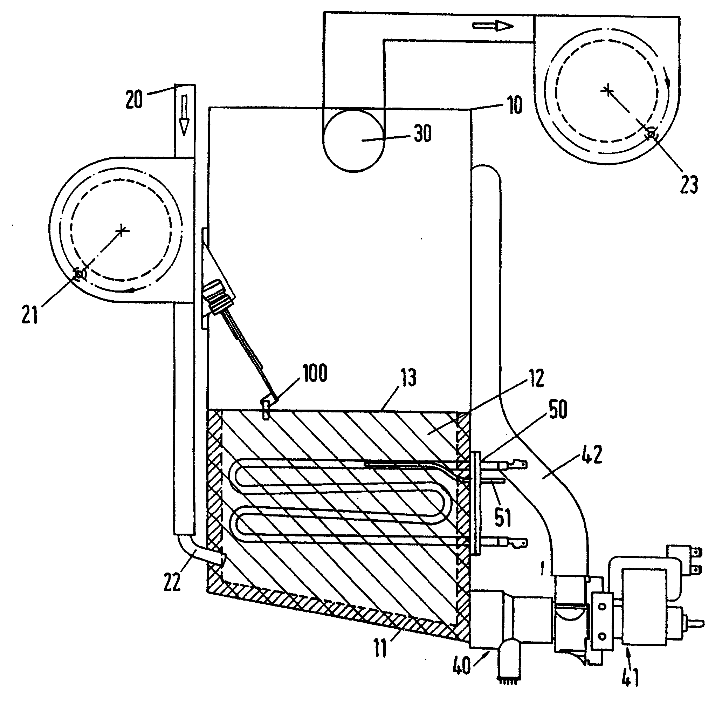

Weitere Merkmale und Vorteile der Erfindung ergeben sich aus der nachstehenden Beschreibung, in der ein Ausführungsbeispiel der Erfindung anhand einer schematischen Zeichnung im Einzelnen erläutert ist. Dabei zeigt die aus einer einzigen Figur bestehende Zeichnung einen Dampfgenerator mit einer erfindungsgemäßen Vorrichtung im senkrechten Schnitt.

Wie die Zeichnung erkennen läßt, heizt der Dampfgenerator 1 im Betrieb Wasser 12 in einem Behälter 10 mit einem Wasserzulauf 20, einem Dampfaustritt 30 und einer Ablaufeinheit 40 über einen Heizkörper 50 auf. Zudem ist innerhalb des Behälters 10 ein Wasserstandsensor 100 angeordnet. Solch ein Dampfgenerator 1 ist für ein Gargerät, insbesondere für im Kombinationsbetrieb mit Heißluft und Heißdampf arbeitende Tisch- oder Standgeräte für die Gastronomie, Großküchen oder dergleichen, geeignet, wobei der Dampfaustritt 30 im Falle des Einsatzes in einem Gargerät in einen nicht gezeigten Garraum mündet.

Der dargestellte Dampfgenerator 1 arbeitet mit der erfindungsgemäßen Vorrichtung wie folgt:

Zur Inbetriebnahme wird Wasser über den Wasserzulauf 20, einen Durchflußmesser 21, wie einen Impulszähler, der die eingefüllte Wassermenge erfaßt, und ein Befüllungsrohr 22 in den Behälter 10 eingefüllt. Dort wird das Wasser 12 über den Heizkörper 50, dessen Temperatur ein Temperatursensor 51 erfaßt, erwärmt und schließlich verdampft. Dieser Dampf tritt aus dem Dampfaustritt 30 aus, wobei die Austrittsmenge über einen Durchflußmesser 23 erfaßt wird.

Im Laufe des Betriebs des Dampfgenerators 1 setzen sich u.a. Kalkablagerungen 11 an den Wänden des Behälters 10 ab, so daß entweder der Nenn-Wasserstand 13, der mittels des Wasserstandsensors 100 erfaßt wird, bei über den Durchflußmesser 21 konstant zugegebener Wassermenge und über den Durchflußmesser 23 gemessener abgeführte Dampfmenge, ansteigt, oder, im Falle einer niveauregulierten Wasseremfüllung unter Einsatz des Wasserstandsensors 100, die über den Durchflußmesser 21, unter Berücksichtigung der über den Durchflußmesser 23 gemessenen abgeführten Dampfinenge, erfaßte Einfüllmenge absinkt. Somit können die Kalkablagerungen 11 entweder über den Anstieg des Nenn-Wasserstands 13 oder über die Reduzierung der Einfüllwassermenge unter Auswertung von Signalen des Wasserstandsensors 100 sowie der Durchflußmesser 21, bestimmt werden.

Sowohl der Wasserstandsensor 100 als auch die Durchflußmesser 21, 23 sind mit einer nicht gezeigten Auswerteeinheit verbunden, die den Verkalkungszustand des Behälters 10 überwacht und bei Übersteigung eines Schwellenwertes ein Signal an eine ebenfalls nicht gezeigte Anzeigeeinheit, beispielsweise umfassend neun stufenweise zuschaltbare Leuchtbalken, abgibt, damit dann von einer Bedienperson ein Entkalkungsvorgang aktiviert werden kann, oder automatisch eine Entkalkung initiiert wird, wie sie, beispielsweise, in der EP 0 383 327 B1 unter Einsatz einer Entleerpumpe 41 der Ablaufeinheit 40, deren Entleerschlauch 42 zu einer nicht gezeigten Auffangwanne oder einem Entsorgungsablauf führt, bekannt ist.

Somit ist erfindungsgemäß auf einfache und kompakte Weise eine Vorrichtung zur elektronischen Verkalkungsüberwachung gegeben, die dem verläßlichen Verhindern einer störenden Verkalkung des Behälters 10 über die Überwachung des Füllvolumens des Behälters 10 dient.

Die in der vorstehenden Beschreibung, in der Zeichnung sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung zum Erwärmen und/oder Verdampfen eine Flüssigkeit mit einer Vorrichtung zur electronischen Verkalkungsüberwachung, die einen Behälter zur zumindest zeitweisen Aufnahme einer Flüssigkeit mit einem Flüssigkeitszulauf, einem Flüssigkeitsablauf und/oder einem Dampfaustritt sowie einen Heizkörper zum Verdampfen von Flüssigkeit aus dem Behälter umfaßt, **gekennzeichnet durch**
eine Auswerteeinheit in Verbindung mit zumindest einem Flüssigkeitsstandsensor (100) und zumindest einem Durchflußmesser (21, 23), wobei in die Auswerteeinheit ein Wert für ein Soll-Füllvolumen des Behälters (10) eingebbar und/oder dort speicherbar ist, in der Auswerteeinheit das Soll-Füllvolumen mit einem über den Flüssigkeitsstandsensor (100) erfaßten Nenn-Flüssigkeitsstand (13) bei unter Einsatz des Durchflußmessers (21, 23) konstant zugegebener Wassermenge oder einer über den Durchflußmesser (21, 23) erfaßten Nenn-Einfüllmenge bei niveauregulierter Flüssigkeitseinfüllung unter Einsatz des Flüssigkeitsstandsensors (100) vergleichbar ist, und von der Auswerteeinheit ein Signal aussendbar ist, das ein Maß für den absoluten Nenn-Flüssigkeitsstand, die absolute Nenn-Einfüllmenge, den zu dem Soll-Flüssigkeitsstand relativen Nenn-Flüssigkeitsstand und/oder den zu der Soll-Einfüllmenge relativen Nenn-Einfüllmenge ist.

2. Vorrichtung nach Anspruch 1, **dadurch gekennzeichnet, daß**
der Durchflußmesser (23) eine Flüssigkeitsfließ- und/oder Verdampfungsrate erfaßt.

3. Vorrichtung nach Anspruch 1 oder 2, **dadurch gekennzeichnet, daß**
der Durchflußmesser (21, 23) ein Impulszähler ist.

4. Vorrichtung nach einem der vorangehenden Ansprüche, **dadurch gekennzeichnet, daß**
ein erster Durchflußmesser (23) stromaufwärts des Behälters (10) und/oder ein zweiter Durchflußmesser (23) stromabwärts des Behälters (10) angeordnet ist bzw. sind.

5. Vorrichtung nach einem der vorangehenden Ansprüche, **dadurch gekennzeichnet, daß**
das Signal anzeigt, daß die Differenz zwischen dem aus dem Nenn-Flüssigkeitsstand oder der Nenn-Einfüllmenge bestimmten Nenn-Füllvolumen und dem Soll-Füllvolumen zumindest einen bestimmten Schwellenwert überschreitet.

6. Vorrichtung nach einem der vorangehenden Ansprüche, **gekennzeichnet durch**
eine Anzeigeeinheit, die das Signal der Auswerteeinheit empfängt und in Abhängigkeit von dem Signal einen optischen und/oder akustischen Warnhinweis ausgibt, vorzugsweise in Form von Leuchtsymbolen.

7. Vorrichtung nach Anspruch 6, **dadurch gekennzeichnet, daß**
die Auswerteeinheit und die Anzeigeeinheit in einem ausgeführt sind.

8. Vorrichtung nach einem der vorangehenden Ansprüche, **dadurch gekennzeichnet, daß**
über die Auswerteeinheit ein Entkalkungsvorgang automatisch initiierbar ist.

9. Vorrichtung nach einem der vorangehenden Ansprüche, **dadurch gekennzeichnet, daß**
die Einrichtung zum Erwärmen und/oder Verdampfen einer Flüssigkeit einen Dampfgenerator, vorzugsweise für ein Gargerät, umfaßt.

## Claims

1. A device for heating and/or evaporating a liquid with a device for electronically monitoring scaling, comprising a container for at least occasional reception of a liquid with a liquid inlet, a liquid outlet and/or a vapour outlet and a heater for evaporating liquid from the container, **characterised by** an evaluation unit in conjunction with at least one liquid level sensor (100) and at least one flowmeter (21, 23), wherein it is possible to input into and/or store in the evaluation unit a set-value for the filled volume of the container (10), the filled volume set-value being adapted to be compared, in the evaluation unit, with a nominal liquid level (13) detected by way of the liquid level sensor (100), in the case of a constant added quantity of water using the flowmeter (21, 23), or a nominal introduced quantity detected by way of the flowmeter (21, 23), in the case of level-regulated liquid introduction using the liquid level sensor (100), and the evaluation unit is adapted to emit a signal which is a measure of the absolute nominal liquid level, the absolute nominal introduced quantity, the nominal liquid level relative to the liquid level set-value and/or the nominal introduced quantity relative to the introduced quantity set-value.

2. A device according to claim 1, **characterised in that** the flowmeter (23) detects a liquid flow rate and/or evaporation rate.

3. A device according to claim 1 or 2, **characterised in that** the flowmeter (21, 23) is a pulse counter.

4. A device according to any one of the preceding claims, **characterised in that** a first flowmeter (23) is disposed upstream of the container (10) and/or a second flowmeter (23) is disposed downstream of the container (10).

5. A device according to any one of the preceding claims, **characterised in that** the signal indicates that the difference between the nominal filled volume determined from the nominal liquid level or the nominal introduced quantity and the filled volume set-value exceeds at least a given threshold.

6. A device according to any one of the preceding claims, **characterised by** a display unit which receives the signal from the evaluation unit and in dependence on the signal delivers an optical and/or acoustic warning, preferably in the form of light symbols.

7. A device according to claim 6, **characterised in that** the evaluation unit and the display unit are made in one.

8. A device according to any one of the preceding claims, **characterised in that** a descaling operation can be initiated automatically by way of the evaluation unit.

9. A device according to any one of the preceding claims, **characterised in that** the device for heating and/or evaporating a liquid comprises a steam generator, preferably for a cooking appliance.

## Revendications

1. Dispositif de chauffage et/ou d'évaporation d'un liquide, avec un dispositif de surveillance électronique de l'entartrage, comprenant un récipient pour recevoir, au moins par moments, un liquide, avec une amenée de liquide, une évacuation de liquide et/ou une sortie de vapeur, ainsi qu'un corps chauffant pour l'évaporation de liquide depuis le récipient, **caractérisé par**
une unité d'évaluation, en liaison avec au moins un capteur de niveau de liquide (100) et au moins un débitmètre (21, 23), où une valeur d'un volume de remplissage de consigne du récipient (10) peut être introduite dans l'unité d'évaluation et/ou y être mémorisée, le volume de remplissage de consigne étant susceptible d'être comparé, dans l'unité d'évaluation, à un niveau de liquide nominal (13) détecté par ledit capteur de niveau de liquide (100), pour une quantité d'eau ajoutée constante, avec utilisation du débitmètre (21, 23), et/ou une quantité d'introduction nominale détectée par le débitmètre (21, 23), pour un remplissage en liquide soumis à une régulation de niveau, avec utilisation du capteur de niveau de liquide (100), et l'unité d'évaluation pouvant émettre un signal qui est une indication quantitative du niveau de liquide nominal absolu, de la quantité d'introduction nominale absolue, du niveau de liquide nominal relatif par rapport au niveau de liquide de consigne et/ou de la quantité d'introduction nominale relative par rapport à la quantité d'introduction de consigne.

2. Dispositif selon la revendication 1, **caractérisé en ce que** le débitmètre (23) détecte un débit d'écoulement de liquide et/ou un débit de vaporisation.

3. Dispositif selon la revendication 1 ou 2, **caractérisé en ce que** le débitmètre (21, 23) est un compteur à impulsions.

4. Dispositif selon l'une des revendications précédentes, **caractérisé en ce qu'**un premier débitmètre (23) est disposé en amont du récipient (10) et/ou un deuxième débitmètre (23) est disposé en aval du récipient (10).

5. Dispositif selon l'une des revendications précédentes, **caractérisé en ce que** le signal indique que la différence entre le volume de remplissage nominal, déterminé à partir du niveau de liquide nominal ou de la quantité d'introduction nominale, et le volume de remplissage de consigne dépasse une valeur seuil déterminée.

6. Dispositif selon l'une des revendications précédentes, **caractérisé par** une unité d'affichage, qui reçoit le signal de l'unité d'évaluation et, en fonction du signal, produit un avertissement optique et/ou acoustique, de préférence sous la forme de symboles lumineux.

7. Dispositif selon la revendication 6, **caractérisé en ce que** l'unité d'évaluation et l'unité d'affichage sont réunies en un seul ensemble.

8. Dispositif selon l'une des revendications précédentes, **caractérisé en ce qu'**un processus de. détartrage est susceptible d'être lancé automatiquement par l'intermédiaire de l'unité d'évaluation.

9. Dispositif selon l'une des revendications précédentes, **caractérisé en ce que** le dispositif de chauffage et/ou d'évaporation d'un liquide comprend un générateur de vapeur, de préférence pour un appareil de cuisson.
